Europäisches Patentamt

European Patent Office

Office européen des brevets

(19)

(11) EP 0 541 462 B1

(12) # FASCICULE DE BREVET EUROPEEN

(45) Date de publication et mention
de la délivrance du brevet:
**20.01.1999 Bulletin 1999/03**

(51) Int Cl.$^6$: **G06F 1/035**

(21) Numéro de dépôt: **92420392.0**

(22) Date de dépôt: **02.11.1992**

(54) **Circuit élévateur au carré de nombres binaires**

Quadrierschaltung für Binärzahlen

Squaring circuit for binary numbers

(84) Etats contractants désignés:
**DE FR GB IT**

(30) Priorité: **05.11.1991 FR 9114019**

(43) Date de publication de la demande:
**12.05.1993 Bulletin 1993/19**

(73) Titulaire: **SGS-THOMSON MICROELECTRONICS S.A.**
**94250 Gentilly (FR)**

(72) Inventeur: **Colavin, Osvaldo**
**F-38340 Voreppe (FR)**

(74) Mandataire: **de Beaumont, Michel**
**1bis, rue Champollion**
**38000 Grenoble (FR)**

(56) Documents cités:
**US-A- 4 313 174**

- COMPUTER DESIGN vol. 11, no. 4, Avril 1972, LITTLETON, MASSACHUSETTS US pages 100 - 104 A. HEMEL 'Square Root Extraction with Read-Only Memories'

**Description**

La présente invention concerne un circuit élévateur au carré d'un nombre binaire de n bits et en particulier un tel circuit à table de carrés stockée dans une mémoire non volatile(ROM).

Une façon classique de réaliser un élévateur d'un nombre binaire X au carré est de multiplier X par lui-même grâce à un circuit multiplieur binaire. Un circuit multiplieur binaire de nombres de 8 bits comprend environ 1500 transistors dans des technologies et architectures courantes.

Une autan façon de réaliser un élévateur au carré d'un nombre binaire X de n bits est de stocker dans une mémoire ROM tous les carrés possibles d'un nombre de n bits et de sélectionner l'un de ces carrés en appliquant le nombre X sur les lignes d'adresses de la mémoire ROM. Si le nombre X est de n bits, il faudra stocker dans la mémoire ROM $2^n$ nombres de 2n bits (le carré d'un nombre de n bits est un nombre comprenant au maximum 2n bits). En conséquence, il faut une mémoire ROM de $2^n.2n$ bits. Une mémoire ROM contenant tous les carrés des nombres de 8 bits comprendra environ 1900 transistors, mais ces transistors sont disposés de façon très régulière, ce qui permet de concevoir facilement la mémoire ROM pour qu'elle occupe, pour n<10, la même surface de silicium que le multiplieur équivalent (dans la même technologie), sinon moins.

Le brevet US-A-4 313 174 décrit un circuit élévateur au carré d'un nombre binaire X de n bits de poids croissant de 0 à n-1, comprenant une table des carrés de nombres binaires p.

Un objet de la présente invention est de réaliser un élévateur au carré à mémoire ROM de taille au moins quatre fois inférieure à la taille de la mémoire ROM d'un élévateur au carré classique équivalent.

Pour atteindre cet objet, chaque nombre p est constitué des seuls bits de poids 1 à n-2 du nombre X, et le circuit comprend en outre un additionneur de nombres de 2n-3 bits recevant sur une première entrée un nombre constitué par le bit de poids n-1 du nombre X, juxtaposé à gauche du carré $p^2$ fourni par la table ; un premier moyen d'aiguillage recevant en entrée le nombre p et le délivrant aux n-2 lignes de poids faible d'une deuxième entrée de l'additionneur si le bit de poids 0 du nombre X est à 1 ; un deuxième moyen d'aiguillage recevant en entrée le nombre p et le délivrant aux n-2 lignes de poids fort de la deuxième entrée si le bit de poids n-1 du nombre X est à 1 ; et un troisième moyen d'aiguillage délivrant un 1 à la ligne restante de la deuxième entrée si les bits de poids 0 et n-1 du nombre X sont tous les deux à 1. Le carré $X^2$ du nombre X est constitué par la sortie de l'additionneur, à laquelle sont juxtaposés à droite un bit à 0 et le bit de poids 0 du nombre X.

Selon un mode de réalisation de la présente invention, la table est une mémoire ne stockant que les 2(n-2)-2 bits de poids fort du nombre $p^2$, ce nombre $p^2$ étant constitué par la sortie de la mémoire , à laquelle sont juxtaposés à droite un bit à 0 et le bit de poids 1 du nombre X.

Selon un mode de réalisation de la présente invention, les premiers moyens d'aiguillage comprennent n-2 portes ET dont des premières entrées reçoivent le bit de poids zéro du nombre X et dont des deuxièmes entrées reçoivent chacune l'un des bits du nombre p.

Selon un mode de réalisation de la présente invention, les deuxièmes moyens d'aiguillage comprenant n-2 portes ET dont les premières entrées reçoivent le bit de poids n-1 du nombre X et dont les deuxièmes entrées reçoivent chacune l'un des bits du nombre p.

Selon un mode de réalisation de la présente invention, les troisièmes moyens d'aiguillage comprennent une porte ET recevant en entrée les bits de poids 0 et n-1 du nombre X.

Ces objets, caractéristiques et avantages ainsi que d'autans de la présente invention seront exposés en détail dans la description suivante de modes de réalisation particuliers faite en relation avec les figures jointes parmi lesquelles :

la figure 1 illustre symboliquement un procédé de calcul utilisé par un circuit élévateur au carré selon la présente invention ; et
la figure 2 illustre un mode de réalisation d'un circuit élévateur au carré selon la présente invention.

Supposons que l'on veuille élever au carré un nombre X de n bits,

$$X = x_{n-1}.2^{n-1} +... + x_1.2^1 + x_0.2^0,$$

où $x_0... x_{n-1}$ désignent respectivement les bits de poids 0 à n-1 du nombre X.

Pour élever ce nombre au carré, la présente invention se base sur le procédé décrit ci-dessous.

Le nombre X peut être écrit sous la forme :

$$X = 2^{n-1} x_{n-1} + 2_p + 2^0 x_0, \qquad (1)$$

où

$$p = 2^{n-3} x_{n-2} + \ldots + 2^1 x_2 + 2^0 x_1.$$

Ainsi, en élevant l'équation (1) au carré et en développant, en tenant compte de ce que $x_i^2 = x_i$ puisque $x_i = 1$ ou 0, on obtient :

$$X^2 = (2^{n-1} x_{n-1} + 2p + x_0)^2$$

$$= 2^{n+1} x_{n-1}\, p + 4x_0\, p + 2^n x_0\, x_{n-1} +$$

$$4p^2 + 2^{2(n-1)} x_{n-1} + x_0$$

$$= T1 + T2 + T3 +$$

$$T4 + T5 + T6. \tag{2}$$

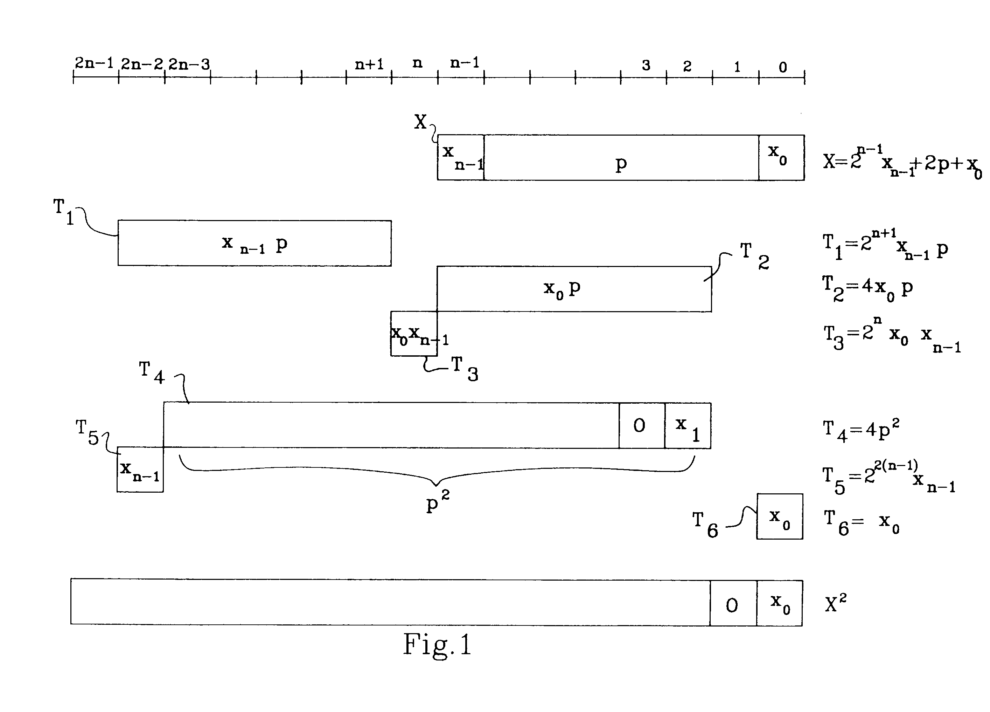

La figure 1 illustre symboliquement cette équation (2). Divers nombres binaires y sont illustrés sous forme de rectangles divisés en cases correspondant à des bits. Chacune des cases des rectangles est disposée dans une colonne qui correspond au poids du bit de la case. Dans la figure, on a numéroté les colonnes 0 à 2n-1, de droite à gauche, les bits de poids le plus faible correspondant à la colonne la plus à droite. Un nombre binaire quelconque exprimé sous la forme $2^i z$, où z est une valeur binaire de $n_z$ bits, est représenté par un rectangle de $n_z$ cases dont la case de poids le plus faible est dans la colonne i. Les cases du rectangle sont occupées par les bits de la valeur z, ce qui est indiqué en écrivant cette valeur dans le rectangle. Les colonnes non occupées par un rectangle correspondent à des bits nuls.

Un rectangle X représente l'expression (1). Les bits $x_0$ à $x_{n-1}$ du nombre X sont rangés dans les colonnes 0 à n-1. Le nombre p est formé par les bits $x_1$ à $x_{n-2}$ du nombre X.

Les six rectangles suivants représentent chacun des termes T1 à T6 du membre de droite de l'équation (2) et le dernier rectangle représente le résultat $X^2$.

Un rectangle T1 représente le terme

$$T1 = 2^{n+1} x_{n-1}\, p$$

de l'équation (2). Ce rectangle, comme cela est représenté, occupe les n-2 colonnes n+1 à 2n-2. La valeur $x_{n-1}\, p$ comprend autant de bits que le nombre p car elle est obtenue par un simple ET logique entre chacun des bits du nombre p et le bit $x_{n-1}$.

Un rectangle T2 représente le terme

$$T2 = 4x_0\, p = 2^2 x_0\, p$$

de l'équation (2). Comme cela est représenté, le rectangle T2 occupe les n-2 colonnes 2 à n-1.

Un rectangle T3 représente le terme

$$T3 = 2^n x_0\, x_{n-1}.$$

Comme cela est représenté, le rectangle T3 occupe la colonne n ($x_0\, x_{n-1}$ correspond à un bit).

On constate en observant les rectangles T1, T2 et T3 que la somme T1+T2+T3 est en fait égale à un nombre formé par la juxtaposition des valeurs $x_{n-1}\, p$, $x_0\, x_{n-1}$ et $x_0\, p$ suivie de deux 0. Par conséquent, il n'est pas nécessaire de prévoir un additionneur binaire pour sommer les termes T1 à T3, car, matériellement, une juxtaposition correspondante des lignes véhiculant les bits des valeurs ci-dessus suffit pour former la somme.

Un rectangle T4 représente le terme

$$T4 = 4p^2 = 2^2 \, p^2$$

de l'équation (2). Comme cela est représenté, le rectangle T4 occupe les 2 (n-2) colonnes 2 à 2n-3.

Un rectangle T5 représente le terme

$$T5 = 2^{2(n-1)} \, x_{n-1}.$$

Ce rectangle T5 occupe la colonne 2n-2.

Enfin, un rectangle T6 représente le terme $T6 = x_0$ et occupe la colonne 0. On constate de nouveau que la somme des termes T4, T5 et T6 correspond à une simple juxtaposition des valeurs $x_{n-1}$, $p^2$, 0 et $x_0$, ce qui évite l'emploi d'un additionneur binaire.

En outre, cette figure nous permet de constater que quel que soit le nombre X, le bit de poids 1 du nombre $X^2$ (représenté par le rectangle $X^2$) est toujours nul et que le bit de poids 0 est toujours égal au bit $x_0$ de poids 0 du nombre X. Ainsi, il n'est pas nécessaire de stocker les bits de poids 0 et 1 du nombre $p^2$ puisqu'ils sont respectivement égaux au bit $x_1$ du nombre p (qui est le bit de poids 1 du nombre X) et à 0. Le nombre $p^2$ peut donc être obtenu, comme cela apparaît dans le rectangle T4, par la juxtaposition de 0 et $x_1$ à droite de ses 2(n-2)-2 bits de poids fort.

Finalement, la somme des six termes T1 à T6 se réduit à une seule somme du nombre correspondant à la juxtaposition des rectangles T1 à T3 et du nombre correspondant à la juxtaposition des rectangles T4 et T5. A cette somme est ensuite juxtaposée à droite un bit nul et le bit $x_0$ (T6) pour obtenir le nombre $X^2$.

Il résulte de cette analyse qu'au lieu de stocker $2^n$ carrés de X, il suffit de stocker $2^{n-2}$ carrés de p. Ainsi, le nombre de valeurs à mémoriser est divisé par 4. De plus, on ne stocke que les 2(n-2)-2 = 2n-6 bits de poids fort des nombres $p^2$ au lieu des 2n bits des nombres $X^2$. Le nombre total de bits de la mémoire nécessaire est donc de $2^{n-2}$ (2n-6) = $2^{n-1}$ (n-3), ce qui entraîne un gain de place de 4n/(n-3) par rapport au circuit classique. Ce gain tend vers 4 lorsque n tend vers l'infini. Pour des nombres X de 8 bits, ce gain est de 6,4.

Bien entendu, selon la présente invention, il faut prévoir en plus de la mémoire des circuits supplémentaires, à savoir, un additionneur 2n-3 bits pour sommer les valeurs (T1+T2+T3) et (T4+T5), et des portes logiques permettant de calculer les valeurs $x_{n-1}$ p, $x_0$ p et $x_0$ $x_{n-1}$. Mais ces circuits additionnels occupent peu de place par rapport à la place gagnée par la réduction de la mémoire.

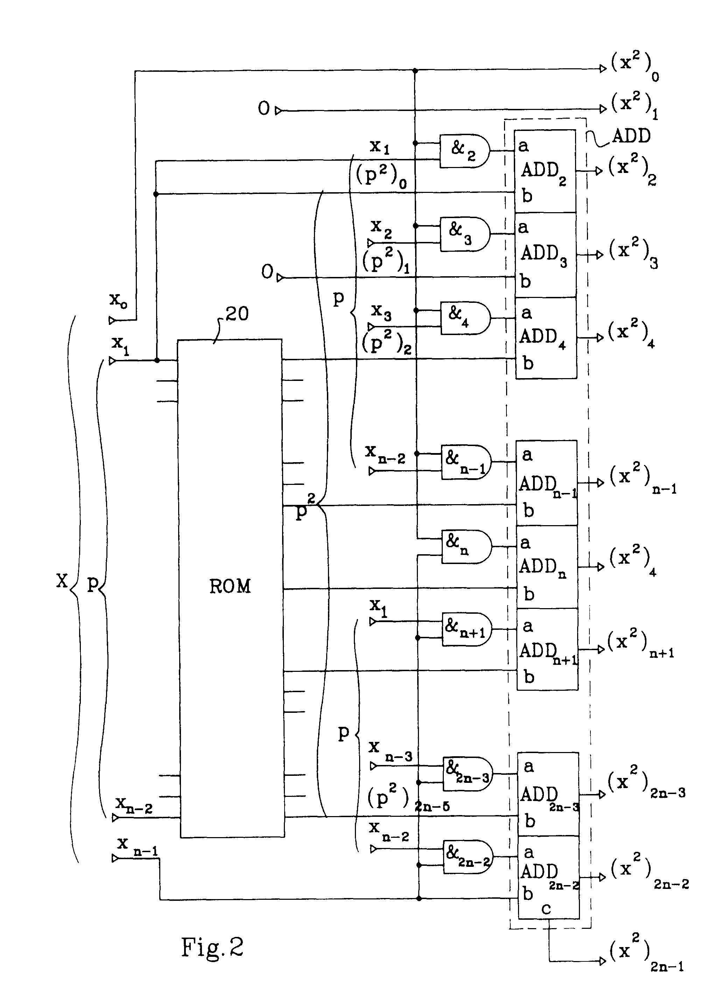

La figure 2 illustre un mode de réalisation de circuit élévateur au carré selon la présente invention. Les bits $x_0$ à $x_{n-1}$ d'un nombre X dont on veut calculer le carré sont introduits dans le circuit sur des lignes $x_0$ à $x_{n-1}$. Les n-2 lignes $x_1$ à $x_{n-2}$ qui véhiculent les bits du nombre p sont reliées aux lignes d'adresses d'une mémoire ROM 20. La mémoire ROM présente sur sa sortie les 2n-6 bits de poids fort $(p^2)_2$ à $(p^2)_{2n-5}$ du nombre $p^2$. Les lignes de poids faible restantes $(p^2)_1$ et $(p^2)_0$ sont reliées respectivement à 0 et à la ligne $x_1$.

Le circuit comprend un additionneur ADD de nombres de 2n-3 bits constitué de 2n-3 additionneurs élémentaires $ADD_2$ à $ADD_{2n-2}$ fournissant respectivement les bits de poids 2 à 2n-2 du nombre $X^2$. Ces additionneurs élémentaires comprennent chacun deux entrées de bit a et b et une sortie de retenue c pour transmettre une retenue à un additionneur élémentaire de poids immédiatement supérieur. La sortie de retenue de l'additionneur $ADD_{2n-2}$ fournit le bit de poids 2n-1 du nombre $X^2$.

Les bits $(p^2)_0$ à $(p^2)_{2n-5}$ sont fournis aux entrées b des additionneurs $ADD_2$ à $ADD_{2n-3}$. L'entrée b de l'additionneur $ADD_{2n-2}$ est reliée à la ligne $x_{n-1}$. Les bits de poids 0 et 1 du nombre $X^2$ sont fournis respectivement par la ligne $x_0$ et une ligne réliée à 0.

L'entrée a des additionneurs $ADD_2$ à $ADD_{2n-2}$ est reliée à la sortie d'une porte ET $\&_2$ à $\&_{2n-2}$. Une première entrée des portes $\&_2$ à $\&_{n-1}$ est reliée à la ligne $x_0$ et les bits $x_1$ à $x_{n-2}$ du nombre p sont respectivement fournis à une deuxième entrée des portes $\&_2$ à $\&_{n-1}$. Ainsi, ces portes fournissent la valeur $x_0$ p à l'additionneur ADD.

Une première entrée des portes $\&_{n+1}$ à $\&_{2n-2}$ est reliée à la ligne $x_{n-1}$ et les bits $x_1$ à $x_{n-2}$ du nombre p sont respectivement fournis à une deuxième entrée de ces portes. Ainsi, les portes $\&_{n+1}$ à $\&_{2n-2}$ fournissent la valeur $x_{n-1}$ p à l'additionneur ADD.

Les deux entrées de la porte $\&_n$ sont reliées respectivement à la ligne $x_0$ et à la ligne $x_{n-1}$. Ainsi, cette porte fournit à l'additionneur ADD le nombre $x_0$ $x_{n-1}$.

En observant la figure 2, on constate que la disposition des portes ET et des additionneurs élémentaires est très régulière, ce qui permet de les réaliser facilement sur une surface réduite.

La présente invention est susceptible de nombreuses variantes et modifications qui apparaîtront à l'homme de l'art, notamment, les portes $\&_2$ à $\&_{n-1}$ peuvent être remplacées par un multiplexeur piloté par la ligne $x_0$ et recevant sur une entrée un nombre binaire nul et sur l'autre entrée le nombre p. De même, les portes $\&_{n+1}$ à $\&_{2n-2}$ peuvent être remplacées par un multiplexeur identique piloté par la ligne $x_{n-1}$. La mémoire ROM peut être remplacée par tout dispositif équivalent, tel qu'un circuit logique programmable (PLA) dont les bits de sortie correspondent à des équations préprogrammées sur les bits présents en entrée (sur les lignes d'adresses). L'additionneur $ADD_2$ peut être remplacé par une porte ET recevant le bit $x_1$ et le complémentaire du bit $x_0$ car $(X^2)_2 = x_1 \cdot \overline{x_0}$.

**Revendications**

1. Circuit élévateur au carré d'un nombre binaire X de n bits de poids croissant de 0 à n-1, comprenant une table (20) des carrés de nombres binaires p ; caractérisé en ce que chaque nombre p est constitué des seuls bits de poids 1 à n-2 du nombre X, et en ce que le circuit comprend :

   - un additionneur de nombres de 2n-3 bits (ADD) recevant sur une première entrée un nombre constitué par le bit de poids n-1 du nombre X, juxtaposé à gauche du carré $p^2$ fourni par la table ;
   - un premier moyen d'aiguillage ($\&_2$... $\&_{n-1}$) recevant en entrée le nombre p et le délivrant aux n-2 lignes de poids faible d'une deuxième entrée de l'additionneur si le bit de poids 0 du nombre X est à 1 ;
   - un deuxième moyen d'aiguillage ($\&_{n+1}$... $\&_{2n-2}$) recevant en entrée le nombre p et le délivrant aux n-2 lignes de poids fort de la deuxième entrée de l'additionneur si le bit de poids n-1 du nombre X est à 1 ;
   - un troisième moyen d'aiguillage ($\&_n$) délivrant un 1 à la ligne restante de la deuxième entrée de l'additionneur si les bits de poids 0 et n-1 du nombre X sont tous les deux à 1 ; le carré $X^2$ du nombre X étant constitué par la sortie de l'additionneur, à laquelle sont juxtaposés à droite un bit à 0 et, comme bit de poids le plus faible, le bit de poids 0 du nombre X.

2. Circuit selon la revendication 1, caractérisé en ce que la table est une mémoire (20) ne stockant que les 2(n-2)-2 bits de poids fort du nombre $p^2$, ce nombre $p^2$ étant constitué par la sortie de la mémoire, à laquelle sont juxtaposés à droite un bit à 0 et le bit de poids 1 du nombre X.

3. Circuit selon la revendication 1, caractérisé en ce que les premiers moyens d'aiguillage comprennent n-2 portes ET dont des premières entrées reçoivent le bit de poids zéro du nombre X et dont des deuxièmes entrées reçoivent chacune l'un des bits du nombre p.

4. Circuit selon la revendication 1, caractérisé en ce que les deuxièmes moyens d'aiguillage comprennent n-2 portes ET dont les premières entrées reçoivent le bit de poids n-1 du nombre X et dont les deuxièmes entrées reçoivent chacune l'un des bits du nombre p.

5. Circuit selon la revendication 1, caractérisé en ce que les troisièmes moyens d'aiguillage comprennent une porte ET recevant en entrée les bits de poids 0 et n-1 du nombre X.

**Patentansprüche**

1. Potenzierschaltung zum Quadrieren einer Binärzahl X mit n Bits mit von 0 bis n - 1 ansteigender Wertigkeit (Signifikanz), mit einer Tabelle (20) der Quadrate von Binärzahlen p,
dadurch **gekennzeichnet** daß
jede der Zahlen p jeweils nur aus den Bits der Wertigkeit 1 bis n-2 der Zahl X besteht, und daß die Schaltung umfaßt:

   - eine Addiervorrichtung (ADD) zum Addieren von Zahlen mit 2n-3 Bits, welcher an einem ersten Eingang eine Zahl zugeführt wird, die aus dem Bit der Wertigkeit n-1 der Zahl X, das links neben das von der Tabelle gelieferte Quadrat $p^2$ gesetzt wird, besteht;

   - eine erste Lenk- bzw. Leitvorrichtung ($\&_2$.. $\&_{n-1}$) der als Eingangsgröße die Zahl p zugeführt wird und die diese den n-2 Leitungen niedriger Wertigkeit eines zweiten Eingangs der Addiervorrichtung zuführt, wenn das Bit der Wertigkeit 0 der Zahl X den Betrag 1 besitzt;

   - eine zweite Lenk- bzw. Leitvorrichtung ( $\&_{n+1}$... ...$\&_{2n-2}$), der am Eingang die Zahl p zugeführt wird und welche diese den n-2 Leitungen hoher Wertigkeit des zweiten Eingangs der Addiervorrichtung zuführt, wenn das Bit der Wertigkeit n-1 der Zahl X den Betrag 1 besitzt;

   - eine dritte Lenk- bzw. Leitvorrichtung ($\&_n$), welche der verbleibenden Leitung des zweiten Eingangs der Addiervorrichtung eine 1 zuführt, wenn die Bits der Wertigkeit 0 und n-1 der Zahl X beide den Betrag 1 besitzen;

wobei das Quadrat $X^2$ der Zahl X durch die Ausgangsgröße der Addiervorrichtung gebildet wird, welcher rechts ein Bit 0 und, als Bit niedrigster Wertigkeit, das Bit der Wertigkeit 0 der Zahl X zugesetzt werden.

2. Schaltung nach Anspruch 1, dadurch gekennzeichnet, daß die Tabelle ein Speicher (20) ist, der nur die 2(n-2)-2 Bits hoher Wertigkeit der Zahl $p^2$ speichert, wobei diese Zahl $p^2$ von der Ausgangsgröße des Speichers gebildet wird, der rechts ein Bit 0 und das Bit der Wertigkeit 1 der Zahl X beigesetzt werden.

3. Schaltung nach Anspruch 1, dadurch gekennzeichnet, daß die ersten Lenk- bzw. Leitmittel n-2 AND-Gatter aufweisen, deren ersten Eingängen das Bit der Wertigkeit 0 der Zahl X und deren zweiten Eingängen jeweils eines der Bits der Zahl p zugeführt wird.

4. Schaltung nach Anspruch 1, dadurch gekennzeichnet, daß die zweiten Lenk- bzw. Leitmittel n-2 AND-Gatter aufweisen, deren ersten Eingängen das Bit mit Wertigkeit n-1 der Zahl X , und deren zweiten Eingängen jeweils eines der Bits der Zahl p zugeführt wird.

5. Schaltung nach Anspruch 1, dadurch gekennzeichnet, daß die dritten Lenk- bzw. Leitmittel ein AND-Gatter aufweisen, denen als Eingangsgrößen die Bits mit Wertigkeit 0 und n-1 der Zahl X zugeführt werden.

## Claims

1. A squaring circuit for raising to the second power a binary number X of n bits with a weight increasing from 0 to n-1, comprising a table (20) of the squares of binary numbers p, characterized in that each number p is constituted only by the bits of weight 1 to n-2 of said first number X, and in that the circuit comprises:

   - an adder (ADD) of numbers of 2n-3 bits receiving at a first input a number constituted by the bit of weight n-1 of number X, juxtaposed on the left of the square $p^2$ provided by the table;
   - first switching means ($\&_2$... $\&_{n-1}$) receiving number p and providing it to the n-2 lines of low weight of a second input of said adder if the bit of weight 0 of number X is 1;
   - second switching means ( $\&_{n+1}$... $\&_{2n-2}$) receiving number p and providing it to the n-2 high weight lines of the second input of the adder if the bit of weight n-1 of number X is 1; and
   - third switching means ($\&_n$) providing a 1 to the remaining line of the second input of the adder if the bits of weight 0 and n-1 of number X are both 1; the square $X^2$ of number X being constituted by the adder output, to which are juxtaposed on the right a bit 0 and, as the lowest weight bit, the bit of weight 0 of number X.

2. A circuit according to claim 1, wherein the table is a memory (20) storing only the 2(n-2)-2 high weight bits of number $p^2$, $p^2$ being constituted by the memory output, to which are juxtaposed on the right a bit 0 and the bit of weight 1 of number X.

3. A circuit according to claim 1, wherein said first switching means include n-2 AND gates, having first inputs which receive the bit of weight 0 of number X and second inputs, each of which receives one of the bits of number p.

4. A circuit according to claim 1, wherein said second switching means include n-2 AND gates, having first inputs which receive the bit of weight n-1 of number X and second inputs, each of which receives one of the bits of number p.

5. A circuit according to claim 1, wherein said third switching means include an AND gate, receiving the bits of weight 0 and n-1 of number X.

Fig.1

EP 0 541 462 B1

Fig.2